(19) Europäisches Patentamt / European Patent Office / Office européen des brevets

(11) **EP 4 119 971 B1**

(12) **FASCICULE DE BREVET EUROPEEN**

(45) Date de publication et mention de la délivrance du brevet:
**04.03.2026   Bulletin 2026/10**

(21) Numéro de dépôt: **21305979.3**

(22) Date de dépôt: **13.07.2021**

(51) Classification Internationale des Brevets (IPC):
**G01S 3/02** (2006.01)       **G01S 1/02** (2010.01)
**H01Q 1/24** (2006.01)       **H01Q 13/08** (2006.01)
**H01Q 21/24** (2006.01)      **H04B 7/10** (2017.01)
**H01Q 3/26** (2006.01)       G01S 3/14 (2006.01)
H01Q 11/10 (2006.01)       H01Q 19/30 (2006.01)
H01Q 25/00 (2006.01)       H01Q 21/00 (2006.01)

(52) Classification Coopérative des Brevets (CPC):
**G01S 3/023; G01S 1/026; H01Q 3/267;** G01S 3/146

(54) **PROCÉDÉ DE CALIBRATION D'UN APPAREIL DE GONIOMÉTRIE AÉROPORTÉ POUR LES BASSES FRÉQUENCES**

VERFAHREN ZUR KALIBRIERUNG EINES LUFTGESTÜTZTEN PEILGERÄTS FÜR NIEDRIGE FREQUENZEN

METHOD FOR CALIBRATING AN AIRBORNE GONIOMETRY FOR LOW FREQUENCIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.01.2023   Bulletin 2023/03**

(73) Titulaire: **Bull SAS**
**78340 Les Clayes-sous-Bois (FR)**

(72) Inventeurs:
• **TENEZE, Bernard**
  **13640 La Roque d'Anthéron (FR)**
• **CHARTON, Philippe**
  **13100 Aix-en-Provence (FR)**

(74) Mandataire: **IPAZ**
**Bâtiment Platon**
**Parc Les Algorithmes**
**91190 Saint-Aubin (FR)**

(56) Documents cités:
**EP-A1- 1 818 681       EP-A1- 3 506 428**
**WO-A2-2007/047119   JP-A- H1 084 219**
**US-A1- 2006 238 413**

## Description

La présente invention concerne un procédé de calibration d'un appareil de goniométrie aéroporté, en particulier pour les basses fréquences. Elle concerne également une installation mettant en œuvre un tel procédé.

Le domaine de l'invention est le domaine des appareils de goniométrie aéroportés pour la détection d'émetteurs radiofréquences, en particulier d'émetteurs radio émettant des signaux de basses fréquences.

## État de la technique

Un appareil de goniométrie aéroporté est généralement composé d'un réseau d'antennes, également appelé réseau antennaire, et d'au moins un récepteur relié audit réseau d'antennes. Il est utilisé pour détecter la position angulaire, angles d'azimut et d'élévation, d'émetteurs radiofréquences se trouvant au niveau du sol ou de la mer lorsqu'il est embarqué sur un porteur aérien, tel qu'un avion. Pour ce faire, l'appareil de goniométrie utilise une table de calibration donnant pour chaque fréquence et chaque polarisation, une position angulaire en fonction de la réponse en réception de l'appareil de goniométrie.

La table de calibration d'un appareil de goniométrie peut être obtenue lors d'une phase de calibration pendant laquelle un émetteur émet un signal de calibration. La réponse en réception du réseau antennaire est mesurée et mémorisée en association avec les caractéristiques connues du signal de calibration, à savoir sa fréquence, sa polarisation, et son angle d'arrivée (azimut et élévation).

La calibration doit être effectuée en champ lointain, à plusieurs dizaines de fois la longueur d'onde du signal de calibration. De plus, en basses fréquences, c'est-à-dire pour les fréquences inférieures à 500MHz, l'appareil de goniométrie doit être calibré en étant embarqué avec le porteur aérien pour prendre en compte l'effet de la structure métallique dudit porteur sur la réponse en réception du réseau antennaire. Pour ces raisons, la calibration en basses fréquences de l'appareil de goniométrie aéroporté ne peut pas être réalisée en chambre anéchoïde car il n'existe pas de chambre anéchoïde ayant des dimensions suffisamment grandes permettant de satisfaire toutes ces conditions, en particulier en basses fréquences.

De plus, les techniques actuellement connues de calibration en vol d'un appareil de goniométrie aéroporté pour déterminer une table de calibration pour chaque fréquence, chaque polarisation, et chaque position angulaire, sont très chronophages et coûteuses.

Un but de la présente invention est de remédier à au moins un des inconvénients précités.

Un autre but de la présente invention est de proposer une solution de calibration en vol et en basse fréquence d'un appareil de goniométrie aéroporté moins chronophage et moins coûteuse.

US2006238413A1 concerne une technique d'étalonnage d'un radiogoniomètre pouvant être installé à bord d'un aéronef. La technique comprend: (a) le réglage d'une valeur des plages de temps de séjour du signal de fréquence de communication à une valeur prédéterminée; (b) la synchronisation dans le temps des plages de temps de séjour entre l'émetteur d'étalonnage et le récepteur d'étalonnage à l'aide de signaux d'horloge provenant d'une source de synchronisation commune; (c) la fourniture d'un intervalle de temps de durée de saut dans la plage de temps de séjour pour transmettre la fréquence; (d) la génération du signal de fréquence de communication correspondant à la fréquence pendant l'intervalle de durée de saut. WO2007047119A2 concerne la radiogoniométrie qui corrèle les signaux reçus d'un émetteur mobile distant afin de déterminer la position géographique de cet émetteur. Les signaux reçus sont échantillonnés, numérisés et stockés dans des matrices de covariance. Ils sont ensuite additionnés et normalisés à l'aide d'une équation dont les termes de vitesse sont fixés à zéro afin de minimiser les pics de corrélation parasites, et un pic de corrélation maximal est développé. Une routine de recherche par gradient conjugué est utilisée pour trouver le pic de corrélation des données additionnées. La valeur du pic est ensuite analysée pour voir si elle est supérieure ou inférieure à une valeur prédéterminée. Si la valeur du pic est supérieure à la valeur prédéterminée, l'émetteur est stationnaire et le pic de corrélation localisé correspond à l'emplacement de l'émetteur. Si la valeur du pic est inférieure à la valeur prédéterminée, l'émetteur est en mouvement et le pic n'indique pas l'emplacement correct de l'émetteur. Dans ce cas, un étalonnage du système à différentes fréquences doit être effectué. JPH1084219A concerne un système de radiogoniométrie comprenant deux antennes orthogonales à polarisation linéaire.

## Exposé de l'invention

L'invention permet d'atteindre au moins l'un de ces buts par un procédé de calibration en basse fréquence et en vol d'un appareil de goniométrie comprenant un réseau antennaire, embarqué par un porteur aérien, ledit procédé comprenant pour une position angulaire de réception, une étape de calibration dudit appareil de goniométrie aéroporté à une fréquence donnée, comprenant les opérations suivantes :

- émission, par un émetteur de calibration, à ladite fréquence donnée et en direction dudit appareil de goniométrie, d'au moins deux signaux de calibration, de polarisations orthogonales entre-elles, et
- mesure d'une réponse dudit réseau antennaire pour chacun desdits signaux ;

Ainsi, l'invention propose de réaliser la calibration de l'appareil de goniométrie lorsqu'il est en vol, c'est à dire lorsqu'il est embarqué par un porteur aérien, ce qui permet d'éviter de réaliser cette calibration dans une chambre anéchoïque, et donc de devoir prévoir une chambre anéchoïque de très grandes dimensions, en particulier pour les basses fréquences.

De plus, l'invention permet de réaliser une calibration plus précise de l'appareil de goniométrie, en particulier pour les basses fréquences, car elle permet de prendre en compte les influences de la structure métallique dudit porteur aérien sur lequel ledit appareil de goniométrie, en particulier pour les basses fréquences.

En outre, l'invention permet de réaliser une calibration plus rapide, moins chronophage et moins coûteuse de l'appareil de goniométrie aéroporté car elle permet, en une seule étape réalisée pour une position angulaire et une fréquence données, de déterminer les données de calibration de l'appareil de goniométrie pour plusieurs, voire toutes, les polarisations possibles des ondes électromagnétiques. En effet, à partir des données de calibrations mesurées en vol pour deux polarisations orthogonales entre-elles, il est possible de déduire les données de calibration pour toutes les polarisations possibles d'une onde radiofréquence, car toute polarisation d'une onde radiofréquence se décompose sur la base orthogonale formée par lesdits polarisations orthogonales des signaux de calibration.

Dans la présente demande, par « signal radiofréquence de basse fréquence », on entend un signal radiofréquence dont la fréquence est inférieure ou égale à 500MHz.

Dans la présente demande, par « porteur aérien », on entend tout véhicule volant, tel qu'un avion, un hélicoptère, un dirigeable, un ballon, un drone, etc.

Dans la présente demande, par position angulaire, on entend une position définie par un angle de d'azimut et un angle d'élévation. La position angulaire de réception de l'appareil de goniométrie est la position relative dudit appareil de goniométrie par rapport à l'émetteur des signaux de calibration. En d'autres termes, la position angulaire relative entre le porteur aérien et l'émetteur de calibration correspond à la position angulaire de réception de chaque signal de calibration.

Suivant des modes de réalisation avantageux, les signaux de calibration peuvent être émis simultanément.

Une telle caractéristique permet de diminuer le temps de réalisation de l'étape de calibration, et donc de rendre la calibration moins chronophage et moins coûteuse.

Dans cas, pour différencier les deux signaux de calibration réception au niveau de l'appareil de goniométrie, les signaux de calibration peuvent présenter entre eux un décalage en fréquence. Ce décalage en fréquence peut être minime ou négligeable devant la fréquence de chaque signal de calibration, de sorte que les signaux de calibration sont considérés comme ayant la même fréquence tout en pouvant les discriminer en réception.

Par exemple, la différence de fréquence, notée Δ, entre les signaux de calibration peut être de 200kHz, mais cette valeur n'est nullement limitative et dépend de la fréquence des signaux de calibration.

Toujours suivant un exemple de réalisation non limitatif, les fréquences F1 et F2 des deux signaux de calibration peuvent être centrées sur la fréquence $F_m$ pour laquelle la calibration est effectuée, telles que :

$$F1-F2 = \Delta,$$

et

$$F_m-F_1= -\Delta/2 \text{ et } F_m-F_2= +\Delta/2.$$

Ainsi, chaque signal de calibration présente une fréquence le plus proche possible de la fréquence pour laquelle la calibration est effectuée, tout en permettant de les différencier en réception.

Suivant des modes de réalisation avantageux, les signaux de calibration peuvent être émis à tour de rôle.

Ce mode de réalisation, bien que plus chronophage, permet d'utiliser deux signaux de calibration dont la fréquence est égale à la fréquence $F_m$ pour laquelle la calibration est effectuée.

Suivant une caractéristique avantageuse, le procédé selon l'invention peut comprendre, pour une même position angulaire de réception, plusieurs itérations de l'étape de calibration pour différentes fréquences de sorte à réaliser un balayage en fréquence sur une étendue de fréquence donnée.

Ainsi, lorsque le porteur aérien est dans une position angulaire de réception relativement à l'émetteur, il est possible de balayer toute une gamme de fréquences et de mesurer des données de calibration pour une multitude de fréquences dans une étendue de fréquences. Par conséquent, le temps et le coût associés à la calibration de l'appareil de goniométrie sont diminués par rapport aux techniques actuelles de calibration.

L'étendue de fréquences peut être balayée de manière continue. De préférence, l'étendue de fréquences est balayée suivant un pas fréquentiel prédéterminé. Le pas fréquentiel peut être constant. Alternativement, le pas fréquentiel peut être différent pour différentes gammes de fréquences au sein de l'étendue de fréquences. Par exemple, un premier pas fréquentiel peut être utilisé pour une première gamme de fréquence et un deuxième pas de fréquence peut être utilisé pour une deuxième gamme de fréquences. Suivant encore une autre alternative, le pas de fréquence peut être calculé suivant une relation prédéterminée prenant en compte la fréquence pour laquelle la calibration est effectuée.

Suivant des modes de réalisation préférés, les différentes fréquences pour lesquelles la calibration est effectuée peuvent être préalablement définies et mémorisées dans une table.

Dans tous les cas, il est préférable de synchroniser l'émetteur de calibration et l'appareil de goniométrie de sorte que la fréquence d'émission de l'émetteur est connue par l'appareil de goniométrie à tout moment.

Avantageusement, le procédé selon l'invention peut comprendre plusieurs itérations de l'étape de calibration en différentes positions angulaires de réception, en particulier prédéfinies, et en particulier suivant une trajectoire de calibration prédéterminée.

Ainsi, le porteur aérien peut être déplacé en différentes positions angulaires et pour chaque position angulaire, au moins une itération de l'étape de calibration peut être réalisée. Préférentiellement, à chaque position angulaire l'étape de calibration peut être réitérée plusieurs fois pour couvrir une étendue fréquences, tel que décrit plus haut. Lorsque les mesures de calibration ont été effectuées pour toute l'étendue fréquentielle, le porteur aérien peut être déplacé à une nouvelle position angulaire de réception. Les positions angulaires de réception peuvent être définies suivant une trajectoire de calibration.

La trajectoire de calibration peut comprendre une multitude de positions angulaires suivant un pas angulaire constant ou variable. Le pas angulaire peut être une combinaison d'un pas angulaire d'azimut et d'un pas angulaire d'élévation, ou uniquement l'un de ces pas.

La trajectoire de calibration peut être définie pour couvrir une étendue d'angle d'azimut, par exemple de 0° à 360°.

Alternativement ou en plus, la trajectoire de calibration peut être définie pour couvrir une étendue d'angle d'élévation, par exemple de 0° à 90°, avec :

- 0° correspondant à l'horizontale, c'est-à-dire que la direction entre le porteur aérien et l'émetteur de calibration est sensiblement horizontale. Cette configuration peut être obtenue en disposant le porteur aérien très loin de l'émetteur de calibration ; et
- 90° correspondant à la verticale, c'est-à-dire que la direction entre le porteur aérien et l'émetteur de calibration est sensiblement verticale. Cette configuration peut être obtenue en disposant le porteur aérien à l'aplomb de l'émetteur de calibration.

Suivant des modes de réalisation, la trajectoire de calibration peut comprendre une combinaison quelconque d'au moins une des trajectoires suivantes :

- au moins une trajectoire linéaire horizontale,
- au moins une trajectoire hélicoïdale montante, et/ou
- au moins une trajectoire hélicoïdale descendante.

Préférentiellement, la trajectoire de calibration peut être une combinaison de plusieurs de ces trajectoires pour couvrir un maximum d'angles d'azimut et d'angles d'élévation en un minimum de temps.

Par exemple, la trajectoire de calibration peut comprendre :

- en commençant de très loin de l'émetteur et en allant vers l'émetteur : une trajectoire horizontale suivie d'une trajectoire hélicoïdale montante jusqu'à ce que l'appareil de goniométrie se trouve à l'aplomb de l'émetteur ; et
- en commençant à l'aplomb de l'émetteur et en s'éloignant de l'émetteur : une trajectoire hélicoïdale descendante suivie d'une trajectoire linéaire horizontale.

Une telle trajectoire de calibration permet avantageusement de couvrir un maximum de positions angulaires de réception en un minimum de temps, que ce soit en azimut ou en élévation.

Le procédé selon l'invention peut avantageusement comprendre, pour une position angulaire et une fréquence, au moins une étape de calcul par interpolation de données de calibration pour au moins une polarisation cible, différente des polarisations orthogonales, à partir de données de calibration mesurées à ladite fréquence et à ladite position angulaire, pour lesdits signaux de calibration.

Ainsi, il est possible d'obtenir des données de calibration même pour les polarisations autres que celles des polarisations des signaux de calibration. Pour ce faire, la polarisation cible est projetée sur la base orthogonale formée par les polarisations orthogonales des signaux de calibration. Puis, les données de calibration mesurées pour chacune des polarisations orthogonales sont utilisées pour calculer les données de calibration correspondant à chaque composante de ladite polarisation cible dans la base orthogonale. Enfin, les données de calibration obtenues pour chaque composante de la polarisation cible sont recomposées pour obtenir les données de calibration de la polarisation cible.

Le procédé selon l'invention peut en outre comprendre, pour une position angulaire et une polarisation, au moins une étape de calcul de données de calibration pour au moins une fréquence cible non mesurée à ladite position angulaire et pour ladite polarisation, par interpolation de données de calibration mesurées pour plusieurs fréquences à ladite position angulaire et pour ladite polarisation. Une telle interpolation est appelée l'interpolation fréquentielle dans la suite de la demande et prend en compte les données de calibration mesurées pour plusieurs fréquences de calibration, à ladite position angulaire et pour ladite polarisation.

Ainsi, il est possible d'obtenir par interpolation fréquentielle, des données de calibration pour des fréquences pour lesquelles aucune donnée de calibration n'a été mesurée en vol. Par conséquent, le procédé de calibration selon l'invention permet de diminuer le temps de vol et le coût y afférant pour la calibration de l'appareil de goniométrie.

L'interpolation fréquentielle peut être réalisée par toute fonction connue. Par exemple, l'interpolation fréquentielle peut être réalisée par la fonction GRIDDATA en MATLAB.

L'interpolation fréquentielle peut être réalisée pendant, ou après les étapes de calibration en vol de l'appareil de goniométrie.

L'interpolation fréquentielle peut être réalisée au niveau de l'appareil de goniométrie, au niveau de l'émetteur de calibration, ou, de préférence, sur un autre appareil.

Le procédé selon l'invention peut en outre comprendre, pour une fréquence et une polarisation, au moins une étape de calcul de données de calibration pour au moins une position angulaire cible non mesurée, par interpolation de données de calibration mesurées pour plusieurs positions angulaires à ladite fréquence et pour ladite polarisation. Une telle interpolation est appelée l'interpolation angulaire dans la suite de la demande.

Ainsi, il est possible d'obtenir par interpolation angulaire, des données de calibration pour des positions angulaires pour lesquelles aucune donnée de calibration n'a été mesurée. Par conséquent, le procédé de calibration permet de diminuer le temps de vol et le coût y afférant pour la calibration de l'appareil de goniométrie.

L'interpolation angulaire peut être réalisée par toute fonction connue. Par exemple, l'interpolation angulaire peut être réalisé par la fonction GRIDDATA en MATLAB.

L'interpolation angulaire peut être réalisée pendant, ou après les étapes de calibration en vol de l'appareil de goniométrie.

L'interpolation angulaire peut être réalisée au niveau de l'appareil de goniométrie, ou au niveau de l'émetteur de calibration, ou encore, et de préférence, par un autre appareil.

L'appareil de goniométrie et l'émetteur de calibration peuvent être en communication entre eux, au travers d'un canal de communication mono- ou bidirectionnel.

Une telle communication peut être utilisée par exemple pour synchroniser l'appareil de goniométrie et l'émetteur de calibration lors des mesures de calibration, en particulier pour connaître et ajuster les positions relatives de l'appareil de goniométrie et de l'émetteur, les fréquences des signaux de calibration émises par l'émetteur, etc.

La polarisation de chaque signal de calibration peut être l'une quelconque des polarisations suivantes :

- polarisation linéaire verticale,
- polarisation linéaire horizontale,
- polarisation circulaire droite,
- polarisation circulaire gauche,
- etc.

Suivant un autre aspect de la présente invention, il est proposé un système de calibration d'un appareil de goniométrie aéroporté comprenant des moyens configurés pour mettre en œuvre le procédé selon l'invention.

En particulier, le système selon l'invention peut comprendre :

- un appareil de goniométrie comprenant un réseau antennaire, prévu pour être embarqué par un porteur aérien, et
- au moins un émetteur de calibration, prévu pour émettre au moins deux signaux de calibration de polarisations orthogonales en direction dudit appareil de goniométrie.

En particulier, le système selon l'invention peut comprendre, en termes de moyens techniques, toutes les caractéristiques décrites plus haut en référence au procédé selon l'invention et qui ne sont pas reprises ici, en détail, par soucis de concision.

L'émetteur de calibration peut être disposé au niveau du sol. En particulier, l'émetteur de signaux peut être disposé au sol ou sur un véhicule.

Préférentiellement, l'émetteur de calibration se trouve dans une localisation géographique fixe.

Dans des modes de réalisation préférés, l'émetteur de calibration peut comprendre une unique antenne d'émission double polarisations orthogonales, et en particulier +45°/-45°. Ainsi, les signaux de calibration de polarisations orthogonales peuvent être émise avec une seule antenne.

Alternativement, l'émetteur de calibration peut comprendre deux antennes configurées, et en particulier orientées, suivant deux polarisations orthogonales.

Dans tous les cas, l'émetteur de calibration peut comprendre au moins un générateur alimentant la ou les antennes avec des signaux électriques correspondant aux signaux radiofréquences à émettre.

Avantageusement, le système selon l'invention peut comprendre un premier positionneur pour modifier, ou ajuster, la position angulaire de l'émetteur, et en particulier de la ou des antennes d'émission.

Le premier positionneur peut être configuré pour modifier ou ajuster la direction de visée de la ou des antennes d'émission en azimut et/ou en élévation.

Le premier positionneur peut être un positionneur motorisé commandé par au moins un signal de commande fourni par une unité de commande, tel qu'une carte électronique, un ordinateur, un calculateur, etc. Une telle unité de commande peut par exemple être une unité de commande l'émetteur de calibration.

Préférentiellement, le premier positionneur peut être command pour que la direction de visée de la ou des antennes d'émission de l'émetteur de calibration soit toujours dirigée vers l'appareil de goniométrie en vol.

Avantageusement, le système selon l'invention peut comprendre un deuxième positionneur pour modifier, ou ajuster, la position angulaire du réseau antennaire de l'appareil de goniométrie.

Le deuxième positionneur peut être configuré pour modifier ou ajuster la direction de visée du réseau antennaire en azimut et/ou en élévation.

Le deuxième positionneur peut être un positionneur motorisé commandé par au moins un signal de commande fourni par une unité de commande, tel qu'une carte électronique, un ordinateur, un calculateur, etc. Une telle unité de commande peut par exemple être une unité de commande de l'appareil de goniométrie.

Préférentiellement, le deuxième positionneur peut être commandé de sorte que la direction de visée du réseau antennaire soit toujours pointée par l'émetteur de calibration.

En outre, le système selon l'invention peut comprendre un module de géolocalisation, tel qu'un module GPS, du côté de l'appareil de goniométrie pour localiser la position dudit appareil de goniométrie.

La position de l'appareil de goniométrie peut être utilisée pour s'assurer que, ou pour ajuster le cas échéant, l'appareil de goniométrie se trouve bien dans une position angulaire de réception pour laquelle une mesure de données de calibration est prévue.

Alternativement ou en plus, la position de l'appareil de goniométrie peut être communiquée vers l'émetteur de calibration, pour y ajuster l'orientation dudit émetteur de calibration, et en particulier de la ou de chaque antenne d'émission dudit émetteur de calibration, en vue de s'assurer que la position de visée dudit émetteur de calibration est en direction de l'appareil de goniométrie.

Le module de géolocalisation peut être un module de géolocalisation du porteur aérien. Alternativement, le module de géolocalisation peut être un module de géolocalisation dédié à l'appareil de goniométrie, et en particulier faisant partie de l'appareil de goniométrie.

Avantageusement, le système selon l'invention peut en outre comprendre un module, disposé du côté de l'appareil de goniométrie, pour déterminer au moins une inclinaison dudit appareil de goniométrie, et/ou du porteur aérien.

Ladite au moins une inclinaison peut être utilisée pour corriger, ou ajuster la position angulaire de réception par rapport à l'émetteur de calibration. En effet, l'inclinaison ou l'orientation de l'appareil de goniométrie, et surtout du porteur aérien, peut modifier la position de réception dudit appareil de goniométrie relativement à l'émetteur de calibration.

Le module de mesure d'inclinaison peut être un module du porteur aérien. Alternativement, le module de mesure d'inclinaison peut être un module dédié à l'appareil de goniométrie, et en particulier faisant partie de l'appareil de goniométrie.

Le module de mesure d'inclinaison peut par exemple être une centrale inertielle mesurant un ou plusieurs angles d'inclinaison, suivant une ou plusieurs directions.

Le système selon l'invention peut en outre comprendre au moins une unité de calcul prévue pour calculer, par interpolation, des données de calibration pour au moins une polarisation mon mesurée, ou une fréquence non mesurée ou une position angulaire non mesurée.

Une telle unité de calcul peut-être un ordinateur, un calculateur, un serveur, etc. et plus généralement tout appareil traitement de données configuré pour réaliser une telle interpolation, par exemple au moyen d'un programme d'ordinateur prévu à cet effet et qui est exécuté par ladite unité de calcul.

L'unité de calcul peut être intégrée dans l'appareil de goniométrie. Alternativement, l'unité de calcul peut être intégré dans un appareil, dédié ou non, indépendant dudit appareil de goniométrie.

L'unité de calcul peut être une machine physique ou une machine virtuelle.

En outre, l'appareil de goniométrie et l'émetteur de calibration peuvent être équipés de modules de communication leur permettant de communiquer entre eux.

La communication entre l'appareil de goniométrie et l'émetteur de calibration peut être réalisée au travers d'un canal de communication mono- ou bidirectionnelle.

La communication peut en particulier être utilisée pour synchroniser l'émetteur et l'appareil de goniométrie pour la calibration, en particulier en ce qui concerne leurs positions relatives de sorte à obtenir une position angulaire de réception donnée, et/ou en ce qui concerne la fréquence des signaux de calibration, et plus généralement pour synchroniser une séquence de calibration.

## Description des figures et modes de réalisation

D'autres avantages et caractéristiques apparaîtront à l'examen de la description détaillée d'un mode de réalisation nullement limitatif, et des dessins annexés sur lesquels :

- les FIGURES 1a et 1b sont des représentations schématiques d'un exemple de réalisation non limitatif d'une configuration de calibration d'un appareil de goniométrie aéroporté ;
- la FIGURE 2 est une représentation schématique d'un premier exemple de réalisation non limitatif d'un système de calibration d'un appareil de goniométrie aéroporté selon l'invention ;
- la FIGURE 3 est une représentation schématique d'un autre exemple de réalisation non limitatif d'un système de calibration d'un appareil de goniométrie aéroporté selon l'invention ;
- la FIGURE 4 est une représentation schématique d'un exemple de réalisation non limitatif d'une trajectoire de calibration pouvant être mise en œuvre dans la présente invention ; et
- la FIGURE 5 est une représentation schématique d'un exemple de réalisation non limitatif d'un procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs FIGURES conservent la même référence.

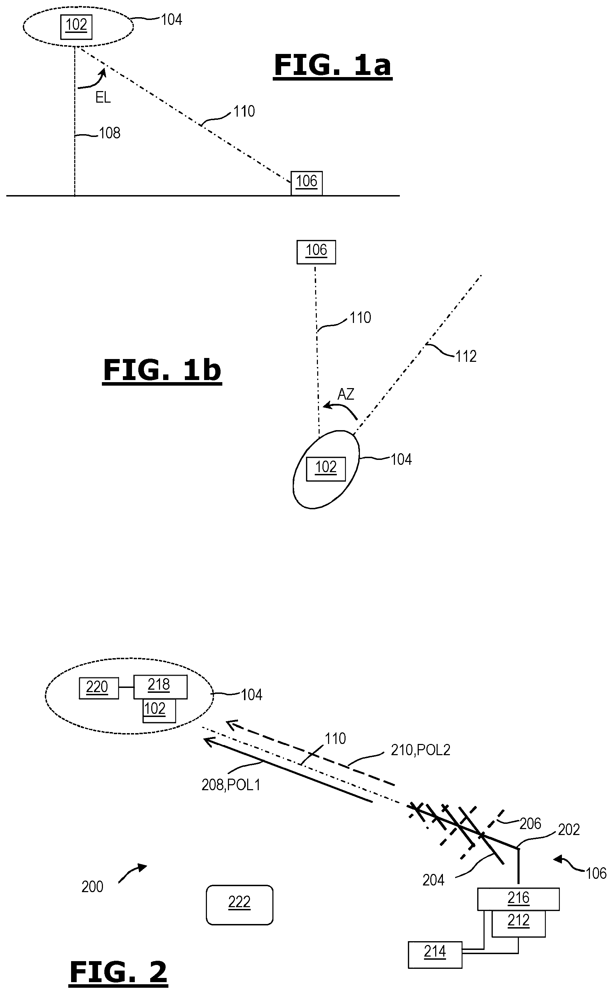

Les FIGURES 1a et 1b sont des représentations schématiques d'un exemple de réalisation non limitatif d'une configuration de calibration en vol d'un appareil de goniométrie aéroporté, respectivement selon une vue de côté et selon une vue de dessus.

Les FIGURES 1a et 1b montrent de manière schématique un appareil de goniométrie 102 transporté par un aéronef, tel que par exemple un avion 104. De manière classique, l'appareil de goniométrie 102 comprend un réseau antennaire (non représenté) composé de plusieurs antennes pour mesurer, chacune, en réception, une donnée amplitude et une donnée phase pour un signal radiofréquence reçu. La donnée d'amplitude et la donnée de phase forment un vecteur complexe, dont la norme représente la valeur d'amplitude et l'angle représente la valeur de phase.

Un émetteur de calibration 106, dont la position est connue, est utilisé pour calibrer l'appareil de goniométrie aéroporté 102. L'émetteur de calibration 106 peut être fixe ou mobile. L'émetteur de calibration 106 peut par exemple être disposé au sol ou sur un véhicule. Pour la calibration, l'émetteur de calibration 106 est dirigé à tout moment vers l'appareil de goniométrie 102.

La calibration de l'appareil de goniométrie 102 est réalisée de la manière suivante. Des signaux de calibration de fréquences et de polarisations connues sont émis par l'émetteur de calibration 106 en direction de l'appareil de goniométrie 102, pendant que celui est en vol. Pour chaque signal de calibration reçu, chaque antenne du réseau antennaire de l'appareil de goniométrie mesure un couple de données {Amplitude, Phase}. Ce couple de données mesurées par chaque antenne est mémorisé en association avec :

- la fréquence du signal de calibration : cette fréquence est connue ;
- la polarisation du signal de calibration : cette polarisation est également connue et
- l'angle de réception, c'est-à-dire la position angulaire relative entre l'émetteur de calibration 106 et l'appareil de goniométrie 102. Cette position angulaire est aussi connue. Généralement, cette position angulaire set exprimée sous la forme d'un angle d'élévation et d'un angle d'azimut de l'appareil de goniométrie aéroporté 102 par rapport à l'émetteur de calibration 106.

Pour chaque position angulaire de l'appareil de goniométrie aéroporté 102 relativement à l'émetteur de calibration, l'étape de calibration peut être réitérée pour différentes fréquences, ou bandes de fréquences, en vue de balayer toute une étendue de fréquences, dans le cadre d'une séquence de calibration.

De plus, l'étapes de calibration peut être réitérée en plusieurs positions angulaires de réception, toujours dans le cadre d'une séquence de calibration.

Ainsi, en fin de calibration, une table de calibration est obtenue pour une pluralité de positions angulaires, avec pour chaque position angulaire, des données de calibration mesurées pour une pluralité de fréquences. Cette table de calibration comprend pour chaque couple {fréquence, position angulaire} une valeur de calibration pour une polarisation donnée.

Comme précisé plus haut, l'appareil de goniométrie 102 comprend un réseau d'antennes. Dans ce cas, la valeur de calibration peut, de manière nullement limitative, être une matrice de covariance indiquant les différences en réception entre lesdites antennes de réception, c'est-à-dire les différences entre les vecteurs complexes mesurés pour chaque antenne de réception.

La position de l'émetteur de calibration 106 par rapport à l'appareil de goniométrie 102 peut être donnée par une combinaison de deux angles, à savoir :

- un angle d'élévation, également appelé angle de site, noté EL, représenté sur la FIGURE 1a, correspondant à l'angle formé entre d'une part la direction verticale 108 entre l'appareil de goniométrie 102 (donc de l'aéronef 104) et le sol, et d'autre part la direction 110 reliant l'appareil de goniométrie 102 (donc de l'aéronef 104) et l'émetteur de calibration 106 ; et
- un angle d'azimut, également appelé gisement, noté AZ, représenté sur la FIGURE 1b, qui correspond à l'angle, dans le plan horizontal, entre d'une part la direction 110 reliant l'aéronef 104 et l'émetteur de calibration 106, et d'autre part une direction de référence 112, par exemple le nord magnétique.

Ces angles AZ et EL peuvent être fournis par des capteurs équipant l'appareil de goniométrie 102 et/ des capteurs équipant l'aéronef 104.

Alternativement, ces angles AZ et EL peuvent être calculés à partir d'une donnée d'altitude et d'une donnée de géolocalisation de l'aéronef 104, respectivement de l'appareil de goniométrie 102, fournies par des capteurs équipant ledit aéronef 104 ou ledit appareil de goniométrie 102. En effet, la géolocalisation de l'émetteur de calibration 106 étant connue, les angles d'azimut et d'élévation peuvent être calculés à partir de l'altitude et de la géolocalisation de l'appareil de goniométrie 102 (ou de l'aéronef 104).

Chaque signal de calibration émis par l'émetteur de calibration 106 peut être une salve de signaux (« burst » en anglais).

Ainsi, lors d'une phase de calibration, il est très important que l'appareil de goniométrie 102 connaisse la fréquence et la polarisation de chaque signal de calibration émis par l'émetteur de calibration 106, au moment où il reçoit ce signal de calibration. Cela nécessite préférentiellement de synchroniser l'appareil de goniométrie 102 et l'émetteur de calibration 106 de sorte que lorsque l'émetteur de calibration 106 émet un signal de calibration, l'appareil de goniométrie 102 connaisse la fréquence et la polarisation dudit signal de calibration pour mémoriser les valeurs mesurées en association avec ladite fréquence et ladite polarisation.

La FIGURE 2 est une représentation schématique d'un premier exemple de réalisation non limitatif d'un système selon l'invention de calibration d'un appareil de goniométrie aéroporté selon l'invention.

Le système 200 de la FIGURE 2 comprend l'appareil de goniométrie 102 embarqué par le porteur aérien 104, et l'émetteur de calibration 106 dans la configuration décrite en référence aux FIGURES 1a et 1b.

Dans le système 200, l'émetteur de calibration 106 comprend une antenne 202 double polarisations. En particulier, l'antenne double polarisations 202 est composée d'une première partie rayonnante 204 et d'une deuxième partie rayonnante 206. Les deux parties rayonnantes 204 et 206 sont dirigées vers l'appareil de goniométrie 102 suivant la direction 110 et sont perpendiculaires entre elles. Par exemple, la première partie rayonnante 204 est inclinée selon un angle de -45° autour de la direction 110, et la deuxième partie rayonnante 206 est inclinée selon un angle de +45° autour de la direction 110. Ainsi, en fonctionnement, la partie rayonnante 204 émet un signal de calibration 208 de polarisation POL1 perpendiculaire à la polarisation POL2 d'un signal de calibration 210 émis par la deuxième partie 206.

Les signaux de calibration 208 et 210, de polarisations perpendiculaires POL1 et POL2, sont reçus par le réseau antennaire de l'appareil de goniométrie 102 embarqué par le porteur aérien 104. Pour chaque signal de calibration 208 et 210, chaque antenne du réseau antennaire mesure une donnée d'amplitude et une donnée de phase formant un vecteur complexe. Ainsi, pour chaque signal de calibration, le réseau antennaire mesure un jeu de données comprenant pour chaque antenne une donnée d'amplitude et une donnée de phase formant un vecteur complexe. Ce jeu de données est mémorisé en association avec :

- la fréquence connue du signal de calibration,
- la polarisation connue du signal de calibration, et
- la position angulaire connue de l'appareil de goniométrie 102 relativement à l'émetteur 106, cette position angulaire étant donnée par un couple d'angle d'azimut AZ et d'angle d'élévation EL et correspondant à l'angle de réception du signal de calibration.

Dans le système 200, l'émetteur de calibration 106 comprend en outre un générateur 212 de signal de calibration alimentant l'antenne double polarisations 202. Pour chaque signal de calibration 208 et 210, le générateur 212 génère un signal électrique représentatif dudit signal de calibration. Ce signal électrique est fourni à l'antenne double polarisations, en particulier à la partie rayonnante concernée de l'antenne double polarisations 202, qui émet alors le signal de calibration 208 ou 210.

Suivant un mode de réalisation, les deux signaux de calibration 208 et 210 peuvent être émis à tour de rôle. Dans ce cas, les deux signaux de calibration 208 et 210 peuvent être de même fréquence, à savoir la fréquence à laquelle on souhaite calibrer l'appareil de goniométrie.

Suivant un autre mode de réalisation, les deux signaux de calibration peuvent être émis simultanément. Dans ce cas, il est nécessaire de discriminer les deux signaux de calibration en réception. Pour ce faire, les deux signaux de calibration 208 et 210 peuvent avoir un léger décalage en fréquence, noté $\Delta$, de valeur négligeable devant la fréquence de ces signaux, permettant de discriminer ces signaux en réception du côté de l'appareil de goniométrie. Par exemple, si on souhaite calibrer l'appareil de goniométrie à une fréquence F, l'un des signaux de calibration peut avoir comme fréquence $F+\Delta/2$, et l'autre des signaux de calibration peut avoir comme fréquence $F-\Delta/2$. Suivant un autre exemple de réalisation, l'un des signaux de calibration peut avoir comme fréquence F, et l'autre des signaux de calibration peut avoir comme fréquence $F-\Delta$, ou $F+\Delta$. La valeur du décalage fréquentiel $\Delta$ peut être égal, et en particulier doit être au moins égal, au pouvoir séparateur fréquentiel de l'appareil de goniométrie.

De manière optionnelle, mais particulièrement avantageuse, l'émetteur de calibration 106 peut en outre comprendre un module de contrôle 214 permettant de modifier la fréquence des signaux de calibration 208 et 210. Ainsi, pour une position angulaire relative entre l'appareil de goniométrie 102 et l'émetteur de calibration 106, il est possible de réaliser une calibration pour plusieurs fréquences, et préférentiellement pour toute une étendue de fréquences.

De manière optionnelle, mais particulièrement avantageuse, l'émetteur de calibration 106 peut en outre comprendre un positionneur 216 permettant modifier l'orientation de l'antenne double émission 202 autour d'au moins une direction. En particulier, le positionneur 216 peut être agencé pour modifier/ajuster la direction de visée de l'antenne double polarisations 202 de sorte qu'elle soit toujours dirigée vers l'appareil de goniométrie 102 pendant la calibration. Par exemple, le positionneur 216 peut être prévu pour modifier la direction de visée de l'antenne double polarisation 202 dans le plan horizontal et dans le plan vertical, c'est-à-dire l'angle d'azimut et l'angle d'élévation de la direction de visée de l'antenne double polarisations 202. Le positionneur 216 peut être une plateforme motorisée et commandable par le module de contrôle 214.

De manière optionnelle, mais particulièrement avantageuse, l'émetteur de calibration 106 peut en outre comprendre un module de communication (non représenté) avec l'appareil de goniométrie 102, pour synchroniser l'émetteur de calibration 106 avec ledit appareil de goniométrie 102 lors de la calibration.

De manière optionnelle, mais particulièrement avantageuse, le système 200 peut comprendre un positionneur 218 permettant modifier l'orientation de l'appareil de goniométrie 102 et en particulier du réseau antennaire de l'appareil de goniométrie 102. Un tel positionneur 218 permet ainsi de corriger des dérives d'orientation dues par exemple à l'inclinaison du porteur aérien 104 pour s'assurer de la position angulaire relative de l'appareil de goniométrie 102 et l'émetteur 106. Le positionneur 218 peut être agencé pour modifier/ajuster la direction de visée du réseau antennaire de l'appareil de goniométrie 102 de sorte qu'il soit toujours dirigé vers l'émetteur de calibration 106. Par exemple, le positionneur 218 peut être prévu pour modifier la direction de visée du réseau antennaire dans le plan horizontal et dans le plan vertical, c'est-à-dire l'angle d'azimut et l'angle d'élévation de la direction de visée du réseau antennaire. Le positionneur 218 peut par exemple être une plateforme motorisée. Le positionneur 218 peut être commandable, par exemple par un module de contrôle 220 dudit appareil de goniométrie 102 en fonction de données d'orientation mesurées par exemple par une centrale inertielle (non représentée) associée audit appareil de goniométrie 102 ou au porteur aérien 104.

De manière optionnelle, mais particulièrement avantageuse, le système 200 peut en outre comprendre un module de communication permettant à l'appareil de goniométrie 102 de communiquer avec l'émetteur de calibration 106, pour synchroniser ledit émetteur de calibration 106 avec ledit appareil de goniométrie 102 lors de la calibration.

De manière optionnelle, mais particulièrement avantageuse, le système 200 peut comprendre un module de géolocalisation (non représenté) pour détecter la position de l'appareil de goniométrie 102 lors de la calibration. Un tel module de géolocalisation peut être associé, ou intégré, à l'appareil de goniométrie 102 ou au porteur aérien 104.

Ainsi, le système selon l'invention permet, pour une fréquence de calibration donnée F, de mesurer, en une seule fois (ou en un seul passage en une position angulaire), des données de calibration pour deux polarisations verticales POL1 et POL2 à cette fréquence.

Une fois les données de calibration mesurées pour ces polarisations orthogonales POL1 et POL2, il est ensuite possible de déterminer, par calcul, des données de calibration pour toutes les polarisations possibles d'une onde radiofréquence à cette même fréquence F, car toutes les polarisations se décomposent sur la base orthogonale formée par les polarisations POL1 et POL2. En définitive, le système selon l'invention permet, pour une fréquence de calibration donnée F, de déterminer, en une seule fois (ou en un seul passage en une position angulaire), des données de calibration pour toutes les polarisations possibles d'une onde radiofréquence à la fréquence F.

De manière optionnelle, mais particulièrement avantageuse, le système 200 peut comprendre une unité de calcul 222 pour calculer, les données de calibration d'une onde radiofréquence de fréquence F et de polarisation $POL_{int}$, différente des polarisations POL1 et POL2, à partir des données de calibration mesurées à la fréquence F pour les polarisations POL1 et POL2. Pour ce faire, la polarisation POL3 est projetée sur la base orthogonale formée par les polarisations orthogonales POL1 et POL2. Puis, les données de calibration mesurées pour chacune des polarisations POL1 et POL2 sont utilisées pour calculer, par interpolation, les données de calibration correspondant à chaque composante de la polarisation $POL_{int}$. Enfin, les données de calibration obtenues pour chaque composante de la polarisation $POL_{int}$ sont recomposées pour obtenir les données de calibration de la polarisation $POL_{int}$, à la fréquence F.

De manière optionnelle, mais particulièrement avantageuse, l'unité de calcul 222 peut en outre être configurée pour calculer, pour une polarisation POL et une position angulaire POS, des données de calibration pour au moins une fréquence $F_{int}$ non mesurée à ladite position angulaire POS et pour ladite polarisation POL, par interpolation fréquentielle des données de calibration mesurées pour plusieurs fréquences à ladite position angulaire POS et pour ladite polarisation POL. L'interpolation fréquentielle peut être réalisée par toute fonction connue. Par exemple, l'interpolation fréquentielle peut être réalisée par la fonction GRIDDATA. Ainsi, il est possible d'obtenir des données de calibration même pour des fréquences pour lesquelles des données de calibration n'ont pas été mesurées en vol.

De manière optionnelle, mais particulièrement avantageuse, l'une unité de calcul 222 peut en outre être configurée pour calculer, pour une fréquence F et une polarisation POL données, des données de calibration pour au moins une position angulaire $POS_{int}$ non mesurée, par interpolation angulaire des données de calibration mesurées pour plusieurs positions angulaires à ladite fréquence F et pour ladite polarisation. L'interpolation angulaire peut être réalisée par toute fonction connue. Par exemple, l'interpolation angulaire peut être réalisée par la fonction GRIDDATA. Ainsi, il est possible d'obtenir, par calcul, des données de calibration même pour des positions angulaires pour lesquelles des données de calibration n'ont pas été mesurées en vol.

Dans l'exemple de la FIGURE 2, une seule unité de calcul 222 est utilisée pour réaliser toutes les interpolations décrites. Bien entendu, il est possible d'utiliser une unité de calcul dédiée et individuelle pour au moins une, en particulier chacune des interpolations décrites.

L'unité de calcul 222 peut être disposée du côté de l'appareil de goniométrie 102, et en particulier être intégrée dans l'appareil de goniométrie 102. Alternativement, l'unité de calcul 222 peut être disposée du côté de l'émetteur de calibration 106, et en particulier être intégrée dans l'émetteur de calibration 106. Suivant encore une autre alternative, l'unité de calcul 222 peut être disposée au niveau d'un autre site, et se présenter sous la forme d'un machine physique ou virtuelle, intégrée ou non dans un autre appareil physique.

L'unité de calcul 222 peut-être un ordinateur, un calculateur, un serveur, une puce programmable, etc.

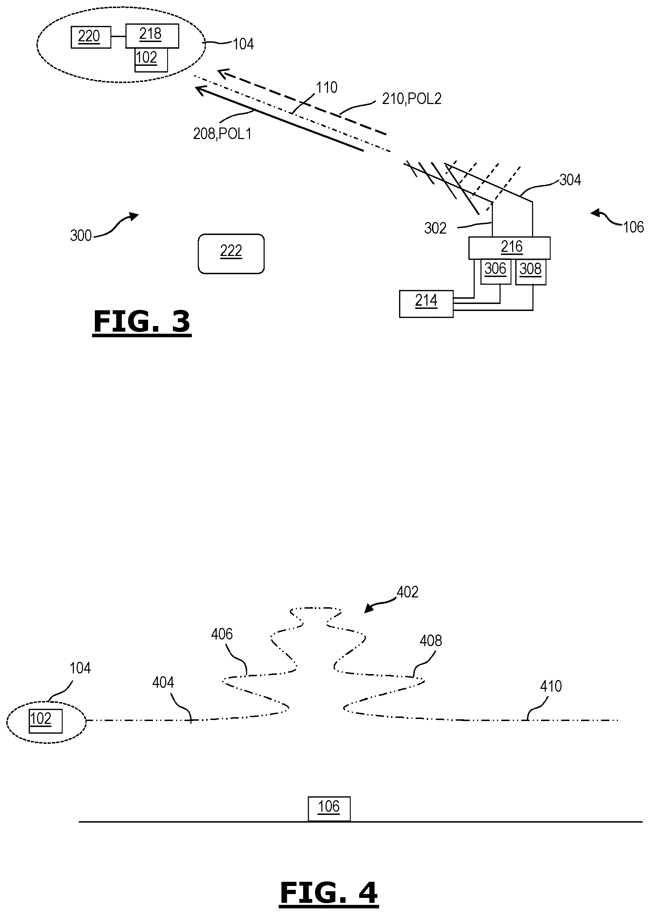

La FIGURE 3 est une représentation schématique d'un deuxième exemple de réalisation non limitatif d'un système selon l'invention de calibration en vol d'un appareil de goniométrie aéroporté selon l'invention.

Le système 300 de la FIGURE 3 comprend tous les éléments du système 200 de la FIGURE 2, sauf en ce qui concerne les différences qui suivent.

Dans le système 300, l'émetteur de calibration comprend non pas une antenne double polarisations mais deux antennes séparées, 302 et 304, perpendiculaires entre-elles autour de la direction 110. Chacune des antennes 302 et 304 est alimentée par un générateur de signal de calibration, respectivement 306 et 308, individuel et dédié à ladite antenne.

Suivant encore d'autres versions non représentées d'un système selon l'invention, il est possible de prévoir un unique générateur de signaux commun aux deux antennes 302 et 304.

La FIGURE 4 est une représentation schématique d'un exemple de réalisation non limitatif d'une trajectoire de calibration pouvant être utilisée dans la présente invention.

L'appareil de goniométrie embarqué 102 dans le porteur aérien 104 peut être déplacé pour réaliser des mesures de calibration en plusieurs positions angulaires relatives entre ledit appareil de goniométrie 102 et l'émetteur de calibration 106, c'est-à-dire pour plusieurs angles de réception.

Pour ce faire, l'appareil de goniométrie 102 peut être déplacé en vol suivant une trajectoire de calibration comprenant une multitude de positions angulaires, suivant un pas angulaire constant ou variable. Le pas angulaire peut être une combinaison d'un pas angulaire d'azimut et d'un pas angulaire d'élévation, ou uniquement l'un de ces pas.

La FIGURE 4 donne un exemple non limitatif d'une telle trajectoire de calibration. La trajectoire de calibration 402, représentée sur la FIGURE 4 à titre d'exemple, permet de couvrir un maximum d'angles d'azimut et d'angles d'élévation en un minimum de temps.

La trajectoire de calibration 402 comprend :

- en commençant de très loin de l'émetteur de calibration 106 et en allant vers ledit émetteur de calibration 106 : une trajectoire horizontale 404 suivie d'une trajectoire hélicoïdale montante 406 jusqu'à ce se trouver à l'aplomb et au-dessus de l'émetteur de calibration 106 ; et
- en commençant à l'aplomb de l'émetteur de calibration 106 et en s'éloignant de l'émetteur de calibration 106 : une trajectoire hélicoïdale descendante 408 suivie d'une trajectoire linéaire horizontale 410.

Bien entendu, cette trajectoire de calibration n'est nullement limitative et d'autres trajectoires de calibration peuvent être utilisées dans le cadre de la présente invention.

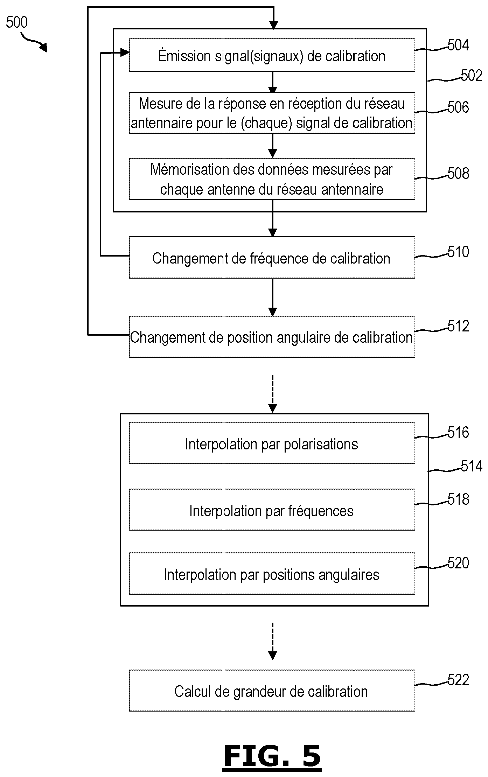

La FIGURE 5 est une représentation schématique d'un exemple de réalisation non limitatif d'un procédé selon l'invention pour la calibration d'un appareil de goniométrie aéroporté.

Le procédé 500 de la FIGURE 5 peut être mis en œuvre par un système selon l'invention, et en particulier par l'un quelconque des systèmes 200 ou 300 des FIGURES 2 ou 3.

Le procédé 500 comprend une étape 502 de calibration de l'appareil de goniométrie lorsqu'il est embarqué par un porteur aérien. L'étape 502 est réalisée pour une position angulaire et une fréquence donnée.

L'étape 502 comporte une étape 504 d'émission d'au moins deux signaux de calibration, de polarisations orthogonales, par un émetteur de calibration dirigé vers l'appareil de goniométrie en vol.

L'étape 502 comporte ensuite une étape 506 de mesure, par chaque antenne du réseau antennaire de l'appareil de goniométrie, d'une donnée d'amplitude et d'une donnée de phase, pour chaque signal de calibration.

Suivant un mode de réalisation les étapes 504 et 506 sont réalisées simultanément car les signaux de calibration sont émis simultanément. Suivant un autre mode de réalisation, les étapes 504 et 506 sont réalisées d'abord pour l'un des signaux de calibration, par exemple le signal de calibration 208 de polarisation POL1, puis pour l'autre des signaux de calibration, par exemple pour le signal de calibration 210 de polarisation POL2.

Lors d'une étape 508, les données mesurées par chaque antenne du réseau antennaire sont mémorisées en association avec la fréquence du signal de calibration, la polarisation du signal de calibration, la position angulaire relative de l'émetteur de calibration par rapport à l'appareil de goniométrie.

Dans le cas où la calibration concerne une étendue de fréquences, le procédé 500 comprend une étape 510 de changement de la fréquence des signaux de calibration et une nouvelle itération de l'étape de calibration 502 est réalisée. Les étapes 502 et 510 sont réitérées ainsi de suite de sorte à réaliser un balayage en fréquence de l'étendue de fréquences. Le balayage en fréquence peut par exemple être réalisé suivant un pas fréquentiel constant, ou variable, en fonction des fréquences concernées.

Une fois l'ensemble de l'étendue des fréquences de calibration balayées, l'appareil de goniométrie est déplacé, lors d'une étape 512, de sorte qu'il est positionné en une nouvelle position angulaire, par exemple suivant une trajectoire de calibration prédéterminé, par exemple la trajectoire 402 de la FIGURE 4. Dans les faits, l'étendue de fréquence est balayée très rapidement de sorte que le porteur aérien n'est pas arrêté en une position donnée et parcourt la trajectoire de calibration sans s'arrêter.

Lorsque le porteur aérien, et en particulier l'appareil de goniométrie, se trouve en une nouvelle position angulaire, les étapes 502-510 sont réitérées. La position angulaire de l'appareil de goniométrie est alors de nouveau modifiée pour une nouvelle itération des étapes 502-510, et ainsi de suite pour balayer une étendue de positions angulaires, de préférence suivant une trajectoire de calibration. Le balayage des positions angulaires peut par exemple être réalisé suivant un pas angulaire constant, ou un pas angulaire variable en fonction de la position de l'appareil de goniométrie par rapport l'émetteur de calibration.

Après avoir balayé l'étendue de positions angulaires, l'appareil de goniométrie n'a plus besoin d'être en vol. Le porteur aérien peut donc se poser.

Le procédé 500 peut optionnellement comprendre une étape 514 d'interpolation de données de calibration comprenant une combinaison quelconque des étapes d'interpolation suivantes.

Par exemple, l'étape d'interpolation 514 peut comprendre une étape 516 d'interpolation de données de calibration pour au moins une polarisation non mesurée $POL_{int}$ en une position angulaire POS et une fréquence F, à partir de données de calibration préalablement mesurées pour les polarisations des signaux de calibration, à cette position angulaire POS et à cette fréquence F. Pour ce faire, la polarisation $POL_{int}$ est projetée sur la base orthogonale formée par les polarisations orthogonales des signaux de calibration, par exemple POL1 et POL2. Puis, les données de calibration mesurées à cette fréquence F et à cette position angulaire POS pour chacune des polarisations POL1 et POL2 sont utilisées pour calculer les données de calibration correspondant à chaque composante de la polarisation $POL_{int}$. Enfin, les données de calibration obtenues pour chaque composante de la polarisation $POL_{int}$ sont recomposées pour obtenir les données de calibration de la polarisation $POL_{int}$, à la fréquence F.

L'étape d'interpolation 514 peut comprendre une étape 518 d'interpolation de données de calibration pour au moins une fréquence non mesurée $F_{int}$ en une position angulaire POS et une polarisation POL, à partir de données de calibration préalablement mesurées ou calculées pour d'autres fréquences à cette position angulaire POS et pour la même polarisation POL. Cette étape d'interpolation fréquentielle 518 peut être réalisée par toute fonction d'interpolation, par exemple GRIDDATA, prenant en entrées les données de calibration préalablement mesurées ou calculées.

L'étape d'interpolation 514 peut en outre comprendre une étape 520 d'interpolation de données de calibration pour au moins une position angulaire non mesurée $POS_{int}$ à une fréquence F et une polarisation POL, à partir de données de calibration préalablement mesurées ou calculées pour d'autres positions angulaires à cette fréquence et pour la même polarisation POL. Cette étape d'interpolation angulaire 520 peut être réalisée par toute fonction d'interpolation, par exemple GRIDDATA, prenant en entrées les données de calibration préalablement mesurées ou calculées.

Le procédé 500 peut optionnellement comprendre une étape 522 de calcul d'une grandeur de calibration pour au moins une position angulaire POS, une fréquence F et une polarisation POL, à partir de données de calibration mesurées ou calculées pour chaque antenne du réseau antennaire. Suivant un exemple de réalisation, cette grandeur de calibration peut être une matrice de covariance entre les données mesurées/calculées en réception pour chacune des antennes du réseau antennaire pour cette position POS, cette fréquence F et cette polarisation.

Bien entendu, l'invention n'est pas limitée aux exemples détaillés ci-dessus donnés à titre d'illustration et la portée générale de l'invention est définie dans les revendications.

## Revendications

1. Procédé (500) de calibration en basse fréquence et en vol d'un appareil de goniométrie (102) comprenant un réseau antennaire, embarqué avec un porteur aérien (104), ledit procédé (500) comprenant pour une position angulaire de réception, une étape (502) de calibration dudit appareil de goniométrie (102) aéroporté à une fréquence donnée, comprenant les opérations suivantes :

   - émission (504), par un émetteur de calibration, à ladite fréquence donnée et en direction dudit appareil de goniométrie (102), d'au moins deux signaux de calibration (208,210), de polarisations (POL1,POL2) orthogonales entre-elles, où les signaux radiofréquences à basse fréquence ont une fréquence inférieure ou égale à 500 MHz, et
   - mesure (506) d'une réponse dudit réseau antennaire pour chacun desdits signaux.

2. Procédé (500) selon la revendication précédente, **caractérisé en ce que** les signaux de calibration (208,210) sont émis simultanément et présentent entre eux un décalage en fréquence négligeable devant leur fréquence, et en particulier de 200kHz.

3. Procédé (500) selon l'une quelconque des revendications précédentes, **caractérisé en ce qu'**il comprend, pour une même position angulaire de réception, plusieurs itérations de l'étape de calibration (502) pour différentes fréquences de sorte à réaliser un balayage en fréquence sur une étendue de fréquence donnée.

4. Procédé (500) selon l'une quelconque des revendications précédentes, **caractérisé en ce qu'**il comprend plusieurs itérations de l'étape de calibration (502) en différentes positions angulaires de réception, suivant une trajectoire de calibration (402) prédéterminée.

5. Procédé (500) selon la revendication 4, **caractérisé en ce que** la trajectoire de calibration (402) comprend une combinaison quelconque d'au moins une des trajectoires suivantes :

   - au moins une trajectoire linéaire horizontale (404,410),
   - au moins ne trajectoire hélicoïdale montante (406), et/ou
   - au moins une trajectoire hélicoïdale descendante (408).

6. Procédé (500) selon l'une quelconque des revendications précédentes, **caractérisé en ce qu'**il comprend, pour une position angulaire et une fréquence, au moins une étape (516) de calcul par interpolation de données de calibration pour au moins une polarisation cible, différente des polarisations orthogonales, à partir de données de calibration mesurées à ladite fréquence et à ladite position angulaire.

7. Système (200;300) de calibration d'un appareil de goniométrie (102) aéroporté comprenant :

   - un appareil de goniométrie (102) comprenant un réseau antennaire, prévu pour être embarqué par un porteur aérien (104), et
   - au moins un émetteur de calibration (106), prévu pour émettre au moins deux signaux de calibration (208,210) de polarisations orthogonales (POL1,POL2) en direction dudit appareil de goniométrie (102) ;

   configurés pour mettre en œuvre toutes les étapes du procédé (100) selon l'une quelconque des revendications précédentes.

8. Système (200) selon la revendication précédente, **caractérisé en ce que** l'émetteur de calibration (106) comprend une unique antenne d'émission (202) double polarisations orthogonales, et en particulier +45°/-45°.

9. Système (200;300) selon l'une quelconque des revendications 7 ou 8, **caractérisé en ce qu'**il comprend en outre un premier positionneur(216) pour modifier la direction de visée de l'émetteur de calibration (106), en particulier en azimut et/ou en élévation.

10. Système (200;300) selon l'une quelconque des revendications 7 à 9, **caractérisé en ce qu'**il comprend en outre un deuxième positionneur (218) pour modifier la direction de visée du réseau antennaire, en particulier en azimut et/ou en élévation.

11. Système (200;300) selon l'une quelconque des revendications 7 à 10, **caractérisé en ce qu'**il comprend en outre un module de géolocalisation du côté de l'appareil de goniométrie (102) pour localiser la position dudit appareil de goniométrie (102).

12. Système (200;300) selon l'une quelconque des revendications 7 à 11, **caractérisé en ce qu'**il comprend en outre un module, disposé du côté de l'appareil de goniométrie, pour déterminer au moins une inclinaison dudit appareil de goniométrie (102) et/ou du porteur aérien (104).

13. Système (200;300) selon l'une quelconque des revendications 7 à 12, **caractérisé en ce qu'**il comprend en outre au moins une unité de calcul (222) prévue pour calculer, par interpolation, des données de calibration pour au moins une polarisation mon mesurée, ou une fréquence non mesurée ou une position angulaire non mesurée.

14. Système (200;300) selon l'une quelconque des revendications 7 à 13, **caractérisé en ce que** l'appareil de goniométrie (102) et l'émetteur de calibration (106) sont équipés de modules de communication leur permettant de communiquer entre eux.

**Patentansprüche**

1. Verfahren (500) zur Kalibrierung bei niedriger Frequenz und im Flug eines Goniometriegeräts (102), das eine Antennenanordnung umfasst, die mit einem Luftträger (104) mitgeführt wird, wobei das Verfahren (500), für eine Winkelaufnahmestellung, einen Kalibrierungsschritt (502) des auf dem Luftwege transportierten Goniometriegeräts (102) bei einer gegebenen Frequenz umfasst, umfassend die folgenden Vorgänge:

   - Aussenden (504), durch einen Kalibrierungssender, bei der gegebenen Frequenz und in Richtung des Goniometriegeräts (102), von mindestens zwei Kalibrierungssignalen (208, 210) mit zueinander orthogonalen Polarisationen (POL1, POL2), wobei die Radiofrequenzsignale mit niedriger Frequenz eine Frequenz von kleiner als oder gleich 500 MHz besitzen, und

- Messen (506) einer Antwort der Antennenanordnung für jedes der Signale.

2. Verfahren (500) nach dem vorstehenden Anspruch, **dadurch gekennzeichnet, dass** die Kalibrierungssignale (208, 210) gleichzeitig ausgesendet werden und angesichts ihrer Frequenz eine vernachlässigbare Frequenzverschiebung, und insbesondere von 200 kHz, aufweisen.

3. Verfahren (500) nach einem der vorstehenden Ansprüche, **dadurch gekennzeichnet, dass** es für eine gleiche Winkelaufnahmestellung mehrere Iterationen des Kalibrierungsschritts (502) für unterschiedliche Frequenzen umfasst, um einen Frequenzdurchlauf über einen gegebenen Frequenzbereich durchzuführen.

4. Verfahren (500) nach einem der vorstehenden Ansprüche, **dadurch gekennzeichnet, dass** es mehrere Iterationen des Kalibrierungsschritts (502) in unterschiedlichen Winkelaufnahmestellungen umfasst, wobei einer zuvor bestimmten Kalibrierungstrajektorie (402) gefolgt wird.

5. Verfahren (500) nach Anspruch 4, **dadurch gekennzeichnet, dass** die Kalibrierungstrajektorie (402) eine beliebige Kombination von mindestens einer der folgenden Trajektorien umfasst:

   - mindestens eine horizontale lineare Trajektorie (404, 410),
   - mindestens eine aufwärts gerichtete spiralförmige Trajektorie (406), und/oder
   - mindestens eine abwärts gerichtete spiralförmige Trajektorie (408).

6. Verfahren (500) nach einem der vorstehenden Ansprüche, **dadurch gekennzeichnet, dass** es für eine Winkelstellung und eine Frequenz mindestens einen Schritt (516) zum Berechnen durch Interpolation von Kalibrierungsdaten für mindestens eine Zielpolarisation, die sich von den orthogonalen Polarisationen unterscheidet, aus Kalibrierungsdaten umfasst, die bei der Frequenz und der Winkelstellung gemessen werden.

7. Kalibrierungssystem (200; 300) für ein auf dem Luftwege transportiertes Goniometriegerät (102), umfassend:

   - ein Goniometriegerät (102), umfassend eine Antennenanordnung, die zum Mitführen durch einen Luftträger (104) vorgesehen ist, und
   - mindestens einen Kalibrierungssender (106), der zum Aussenden von mindestens zwei Kalibrierungssignalen (208, 210) mit orthogonalen Polarisationen (POL1, POL2) in Richtung des Goniometriegeräts (102) vorgesehen ist;

die zum Implementieren aller Verfahrensschritte (100) nach einem der vorstehenden Ansprüche konfiguriert sind.

8. System (200) nach dem vorstehenden Anspruch, **dadurch gekennzeichnet, dass** der Kalibrierungssender (106) eine einzelne Sendeantenne (202) mit zwei orthogonalen Polarisationen, und insbesondere +45°/-45°, umfasst.

9. System (200; 300) nach einem der Ansprüche 7 oder 8, **dadurch gekennzeichnet, dass** es ferner einen ersten Stellungsregler (216) zum Ändern der Blickrichtung des Kalibrierungssenders (106), insbesondere im Azimut und/oder in der Höhe, umfasst.

10. System (200; 300) nach einem der Ansprüche 7 bis 9, **dadurch gekennzeichnet, dass** es ferner einen zweiten Stellungsregler (218) zum Ändern der Blickrichtung der Antennenanordnung, insbesondere im Azimut und/oder in der Höhe, umfasst.

11. System (200; 300) nach einem der Ansprüche 7 bis 10, **dadurch gekennzeichnet, dass** es ferner ein Geolokalisierungsmodul seitens des Goniometriegeräts (102) zum Lokalisieren der Stellung des Goniometriegeräts (102) umfasst.

12. System (200; 300) nach einem der Ansprüche 7 bis 11, **dadurch gekennzeichnet, dass** es ferner ein Modul, das seitens des Goniometriegerät angeordnet ist, zum Bestimmen mindestens einer Neigung des Goniometriegeräts (102) und/oder des Luftträgers (104) umfasst.

13. System (200; 300) nach einem der Ansprüche 7 bis 12, **dadurch gekennzeichnet, dass** es ferner mindestens eine Berechnungseinheit (222) umfasst, die zum Berechnen, durch Interpolation, von Kalibrierungsdaten für mindestens eine nicht gemessene Polarisation oder eine nicht gemessene Frequenz oder eine nicht gemessene Winkelstellung vorgesehen ist.

14. System (200; 300) nach einem der Ansprüche 7 bis 13, **dadurch gekennzeichnet, dass** das Goniometriegerät (102) und der Kalibrierungssender (106) mit Kommunikationsmodulen ausgestattet sind, die es ihnen ermöglichen, untereinander zu kommunizieren.

## Claims

1. A method (500) for calibrating at low frequency and in-flight a goniometry apparatus (102) comprising an antenna array, on board an air carrier (104), said method (500) comprising for an angular position of reception, a step (502) for calibrating said airborne goniometry apparatus (102) at a given frequency, comprising the following operations:

   - transmitting (504), by means of a calibration transmitter, at said given frequency and in the direction of said goniometry apparatus (102), at least two calibration signals (208, 210), with polarizations (POL1, POL2) orthogonal to each other, where low frequency radiofrequency signals have frequencies equal to, or lower than, 500 MHz, and
   - measuring (506) a response of said antenna array for each of said signals.

2. The method (500) according to the preceding claim, **characterized in that** the calibration signals (208, 210) are transmitted simultaneously and have a frequency shift therebetween that is negligible with respect to their frequency, and in particular of 200 kHz.

3. The method (500) according to any one of the preceding claims, **characterized in that** it comprises, for the same angular position of reception, several iterations of the calibration step (502) for different frequencies so as to perform a frequency scan over a given range of frequency.

4. The method (500) according to any one of the preceding claims, **characterized in that** it comprises several iterations of the calibration step (502) in different angular positions of reception, following a predetermined calibration path (402).

5. The method (500) according to claim 2, **characterized in that** the calibration path (402) comprises any combination of at least one of the following paths:

   - at least one horizontal linear path (404, 410),
   - at least one upward helical path (406), and/or
   - at least one downward helical path (408).

6. The method (500) according to any one of the preceding claims, **characterized in that** it comprises, for an angular position and a frequency, at least one step (516) for calculating by interpolation calibration data for at least one target polarization, which is different from orthogonal polarizations, based on calibration data measured at said frequency and at said angular position.

7. A system (200;300) for calibrating an airborne goniometry apparatus (102) comprising:

   - a goniometry apparatus (102) comprising an antenna array, intended to be on board an aerial carrier (104), and
   - at least one calibration transmitter (106), intended to transmit at least two calibration signals (208, 210) with orthogonal polarizations (POL1, POL2) in the direction of said goniometry apparatus (102);

   configured to implement all the steps of the method (100) according to any one of the preceding claims.

8. The system (200) according to the preceding claim, **characterized in that** the calibration transmitter (106) comprises a single dual orthogonal polarization transmission antenna (202), and in particular +45°/-45°.

9. The system (200; 300) according to any one of claims 7 or 8, **characterized in that** it further comprises a first positioner (216) for modifying the look direction of the calibration transmitter (106), in particular in azimuth and/or in elevation.

10. The system (200; 300) according to any one of claims 7 to 9, **characterized in that** it further comprises a second positioner (218) for modifying the look direction of the antenna array, in particular in azimuth and/or in elevation.

11. The system (200; 300) according to any one of claims 7 to 10, **characterized in that** it further comprises a geolocation module on the goniometry apparatus (102) side to locate the position of said goniometry apparatus (102).

12. The system (200; 300) according to any one of claims 7 to 11, **characterized in that** it further comprises a module, disposed on the goniometry apparatus side, to determine at least one tilt of said goniometry apparatus (102) and/or of the aerial carrier (104).

13. The system (200; 300) according to any one of claims 7 to 12, **characterized in that** it further comprises at least one calculation unit (222) intended to calculate, by interpolation, calibration data for at least one unmeasured polarization, or an unmeasured frequency or an unmeasured angular position.

14. The system (200; 300) according to any one of claims 7 to 13, **characterized in that** the goniometry apparatus (102) and the calibration apparatus (106) are equipped with communication modules enabling them to communicate with each other.

**FIG. 1a**

**FIG. 1b**

**FIG. 2**

**FIG. 3**

**FIG. 4**

500

504 — Émission signal(signaux) de calibration

502

506 — Mesure de la réponse en réception du réseau antennaire pour le (chaque) signal de calibration

508 — Mémorisation des données mesurées par chaque antenne du réseau antennaire

510 — Changement de fréquence de calibration

512 — Changement de position angulaire de calibration

516 — Interpolation par polarisations

514

518 — Interpolation par fréquences

520 — Interpolation par positions angulaires

522 — Calcul de grandeur de calibration

## FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2006238413 A1
- WO 2007047119 A2
- JP H1084219 A